## Europäisches Patentamt
## European Patent Office
## Office européen des brevets

(19)

(11) Veröffentlichungsnummer: **0 185 934**
A1

(12) ## EUROPÄISCHE PATENTANMELDUNG

(21) Anmeldenummer: 85114791.8

(22) Anmeldetag: 21.11.85

(51) Int. Cl.⁴: **F 01 N 7/08**
F 01 N 7/18, F 16 L 11/14

(30) Priorität: 22.12.84 DE 3447270

(43) Veröffentlichungstag der Anmeldung:
02.07.86 Patentblatt 86/27

(84) Benannte Vertragsstaaten:
AT BE CH FR GB LI NL SE

(71) Anmelder: Witzenmann GmbH Metallschlauch-Fabrik
Pforzheim
Östliche Karl-Friedrich-Strasse 134
D-7530 Pforzheim(DE)

(72) Erfinder: Tubach, Hans
Federbachstrasse 13
D-7541 Straubenhardt 6(DE)

(74) Vertreter: Lemcke, Rupert, Dipl.-Ing. et al,
Patentanwälte Dipl.-Ing. R. Lemcke Dr.-Ing. H.J.
Brommer Amalienstrasse 28 Postfach 4026
D-7500 Karlsruhe 1(DE)

(54) **Metallschlauch in Form eines Wellschlauches oder Wickelschlauches mit schraubengangförmig verlaufender Wellung bzw. Wicklung.**

(57) Es wird ein Metallschlauch (10) in Form eines ein- oder mehrwandigen Wellschlauches oder Wickelschlauches mit schraubengangförmig verlaufender Wellung bzw. Wicklung angegeben, bei dem mit wenigstens einem Schlauchende durch Schweißen oder Löten eine hohlzylindrische Metallhülse (11) verbunden ist, wobei sich Schlauch (10) und Hülse (11) über ein Gewinde (12) der Hülse (11) in Schraubverbindung befinden. Hier ist die Hülse (11) als Blechteil ausgebildet und an einem Ende mit einem Einschnitt versehen, von dem ausgehend das sich in Umfangsrichtung anschließende Wandungsmaterial der Hülse (11) zur Hülsenmitte hin bzw. von der Hülsenmitte fort unter Bildung eines Gewindeganges (12) abgebogen ist.

Fig. 3

EP 0 185 934 A1

PATENTANWÄLTE
DIPL.-ING. R. LEMCKE
DR.-ING. H. J. BROMMER
AMALIENSTRASSE 28
7500 KARLSRUHE 1
TEL.: 0721 / 28778-9

- 1 -

0185934

Witzenmann GmbH Metallschlauch-Fabrik Pforzheim
Östliche Karl-Friedrich-Straße 134
7530 Pforzheim

:

Metallschlauch in Form eines Wellschlauches
oder Wickelschlauches mit schraubengangförmig verlaufender Wellung bzw. Wicklung
==================================================

Die Erfindung betrifft einen Metallschlauch in Form eines
ein- oder mehrwandigen Wellschlauches oder Wickelschlauches
mit schraubengangförmig verlaufender Wellung bzw. Wicklung,
insbesondere für Abgasanlagen von Kraftfahrzeugen, mit
einer mit wenigstens einem Schlauchende durch Schweißen
oder Löten verbundenen, hohlzylindrischen Metallhülse,
wobei der Schlauch und die Hülse sich über ein an der
Hülse ausgebildetes, der Wellung bzw. Wicklung des Schlauches angepaßtes Gewinde in Schraubverbindung befinden.

Als Schläuche der genannten Art kommen grundsätzlich
alle Bauformen in Frage, bei denen der Schlauch eine
schraubengangförmig verlaufende, wellenförmige Profilierung aufweist. Dabei kann die Herstellung des Schlauches beispielsweise durch Längsnahtschweißen eines Rohres und dessen wellenförmige Profilierung erfolgen. Es kann jedoch auch die Herstellung durch Wickeln eines vorprofilierten Bandes erfolgen, wobei die Profilierung so ausgebildet sein kann, daß die einzelnen Windungen gegenseitig axial unverschiebbar oder aber auch axial in Grenzen verschiebbar sind. All diese Schläuche sind flexible Bauelemente, die wegen dieser Eigenschaft besonders dort Einsatz finden, wo Relativbewegungen zwischen zwei miteinander zu verbindenden Teilen aufzufangen sind oder aber beispielsweise auch wärmedehnungsbedingte gegenseitige Verlagerung. Dies trifft besonders beim erwähnten Einsatz in Abgasanlagen für Brennkraftmaschinen zu, gilt jedoch gleichermaßen beispielsweise für Absaug oder Lüftungsanlagen, also allgemein für medienführende Leitungen, so daß diesbezüglich keine Einschränkung des Gegenstandes der Erfindung gegeben ist.

Ein Schlauch der eingangs genannten bekannten Art trägt an den Enden eine bezüglich der beiderseitigen Stirnkanten bündig aufgeschraubte Hülse, wobei die Stirnkanten von Hülse und Schlauch miteinander verschweißt sind. Diese Verschweißung und die Anordnung der Hülse dienen im wesentlichen dazu, das Schlauchende definiert und mediendicht zu erfassen, da die Schlauchenden jeweils einen auslaufenden Gang der schraubengangförmigen Profilierung aufweisen, wie er beim Abtrennen des Schlauches stehengeblieben ist. Dieser auslaufende Gang bildet keine glatte Abschlußkante, so daß sich ein so endseits ausgebildeter
Schlauch nicht zum Anschluß an weitere Teile eignet.
Denn die am Ende auslaufende und damit offene Windung
bildet entsprechend der Profilierung des Schlauches wechselnde Durchmesser und kann auch bei gewickelten Schläuchen aufspringen, ist dort auf jeden Fall in Radial- und
Umfangsrichtung nicht fest.

Die bekannte Hülse ist der Abschnitt eines Rohres, in dem
beispielsweise durch Drehen ein Innengewinde ausgebildet
ist. Eine solche Hülse ist hinsichtlich ihrer Gestehung
sowohl hinsichtlich der Fertigung als auch hinsichtlich
des Materials teuer. Ihre Verbindung mit dem Schlauch erfordert ein umständliches und zeitraubendes Aufschrauben
über mehrere Drehungen von Hand. Auch schweißtechnisch
entstehen Schwierigkeiten durch das neben dem Gewindematerial stehende, zylindrische Rohrmaterial, das an der
Stirnkante durch den schraubengangförmigen Verlauf des
Gewindes unterschiedlich lang ist und so eine ungleiche
Wärmeabfuhr bedingt, die das Einstellen des Schweißautomaten erschwert, in der Praxis aber zu einer erheblichen Ausschußquote führt, indem die stirnseitige Schweißverbindung ungleichmäßig und insbesondere undicht ist,
so daß der so gefertigte Schlauch der stirnseitigen Dichtigkeitsprüfung nicht standhält. Dabei verhindert die erwähnte unterschiedliche Wärmeabfuhr insbesondere, daß
während des Schweißvorganges die dünne, stirnseitige Wand
des Schlauches weggeschmolzen wird, der Schlauch also
stirnseits nicht während des Schweißvorganges vollständig
verflüssigt wird.

Diese Verhältnisse gelten entsprechend für das Löten,
da sich auch hierzu die über den Umfang ungleichmäßigen
stirnseitigen Verhältnisse bei der automatischen Bearbeitung kaum beherrschen lassen.

Aufgabe der Erfindung ist es, einen Schlauch der eingangs
genannten Art dahingehend zu vereinfachen, zu verbessern
und zu verbilligen, daß durch eine einfach und materialsparend herzustellende, in ihrer Funktionsweise gegenüber
dem Bekannten unveränderte Hülse trotzdem das Stirnende
des Schlauches durch Gewindeeingriff erfaßt wird, wobei
aber hinsichtlich der schweißenden bzw. lötenden Anschlußverbindung über den Umfang gleichmäßige Verhältnisse geschaffen werden sollen, so daß die Einstellung der Schweiß-
bzw. Lötvorrichtung vereinfacht ist und sich eine sichere,
gleichmäßige und insbesondere dichte Verbindung bei Vermeidung von Ausschuß schaffen läßt. Außerdem soll die Montage von Schlauch und Hülse vereinfacht und auf einen
kurzen Arbeitsgang reduziert werden.

Diese Aufgabe ist erfindungsgemäß dadurch gelöst, daß die
Hülse als Blechteil ausgebildet ist, daß ein Hülsenende
einen Einschnitt aufweist und daß das in Umfangsrichtung
an den Einschnitt anschließende Wandungsmaterial der Hülse
zu deren Mitte hin oder von deren Mitte fort unterschiedlich stark und damit zu einem Gewindegang abgebogen ist.
Dabei wird der Einschnitt in der Regel im wesentlichen
parallel zur Hülsenachse angeordnet sein. Er kann jedoch
auch je nach den Umständen des Einzelfalles schräg verlaufen.

Durch diese erfindungsgemäßen Maßnahmen ist zunächst
eine einfache und billige Hülse geschaffen, die materialmäßig auf das Minimum reduziert ist und sich durch einfache Blechverformung leicht herstellen läßt. Dabei bedarf
die Herstellung des Gewindeganges keiner besonderen und
teuren Bearbeitung, da sie durch einfachen Präge- bzw.
Stanzvorgang zum Entstehen gebracht werden kann.

Dadurch, daß an der Hülse ein endständiger Gewindegang
ausgebildet ist, ist dem Erfordernis Genüge getan, das
Schlauchende hinsichtlich der letzten, auslaufenden Windung definiert zu erfassen, wobei andererseits beim Verschweißen bzw. Verlöten von Schlauch und Hülse über den
Umfang gesehen gleiche Materialmengen von Schlauch und
Hülse am Arbeitsgang und an der Wärmebeeinflussung teilnehmen, so daß sich ohne Schwierigkeiten ein über den Umfang gleichmäßiger Schweiß- bzw. Lötvorgang einstellen
läßt. Dabei kann für die schweißende Bearbeitung der
durch Abbiegen entstandene Gewindegang der Hülse als Zusatzschweißstoff mitverwendet werden, so daß auch hinsichtlich des für die Verschweißung erforderlichen Materials
eine Ersparnis eintritt.

Durch die nunmehr mögliche, über den Umfang gleichmäßige
Schweiß- bzw. Lötverbindung sind undichte Anschlußstellen
verhindert und Ausschuß unterbunden.

Außerdem ist die Montage von Hülse und Schlauch erleichtert, denn nunmehr ist nur noch im wesentlichen eine
schraubende Drehung erforderlich, um die Hülse auf dem
Schlauchende anzubringen. Dies gilt gleichermaßen für eine
auf das Schlauchende aufgeschraubte oder eine in das Schlauchende eingeschraubte Hülse.

Die erfindungsgemäße Gestaltung ermöglicht es jedoch auch, eine Hülse durch Aufschrauben oder Einschrauben derart mit dem Schlauchende zu verbinden, daß die übrige hohlzylindrische Länge der Hülse vor dem Schlauchende frei vorsteht und damit gleichzeitig als Anschlußteil zur Verfügung steht. Hinsichtlich der schweißenden oder lötenden Verbindung mit dem Schlauch ergeben sich hier keine Unterschiede. Damit ist es durch die erfindungsgemäße Ausbildung leicht möglich, ein und dieselbe Hülse jeweils zwei verschiedenen Zwecken zuzuführen je nachdem, ob sie sich mit ihrem neben dem Gewinde bestehenden zylindrischen Teil am Schlauch entlang erstreckt oder vor dessen Ende vorsteht.

Hinsichtlich der erfindungsgemäßen Ausbildung des Gewindeganges kann dieser gleichmäßig umlaufend ausgebildet sein. Es kann jedoch im Einzelfall auch genügen, daß nur eine partielle Ausbildung neben dem Einschnitt über einen Teil des Umfanges erfolgt und im übrigen eine Umbördelung ohne große Rücksichtnahme auf eine Gewindesteigung vorliegt, da das die Hülse bildende Blechmaterial innerhalb der Wellentäler des Schlauches Spiel hat, hier also eine besondere Rücksichtnahme auf die Genauigkeit des Gewindeverlaufes nicht erforderlich ist.

0185934

Hinsichtlich einer bevorzugten Ausführungsform nach der
Erfindung ist es zweckmäßig, daß die Hülse sich in Axialrichtung über mehrere Windungen bzw. Wicklungen des
Schlauches erstreckt, bezüglich des den Gewindegang aufweisenden Endes bündig auf das Schlauchende auf- bzw. in
dieses eingeschraubt ist und daß die bündigen Stirnkanten
von Schlauch und Hülse miteinander verschweißt sind. Hier
kann dann ein Anschlußflansch aus Metall mit seinem zylindrischen Teil in das Schlauchende ein- bzw. auf dieses
aufgesetzt sowie mit den Stirnkanten von Schlauch und
Hülse verschweißt sein, wobei die schweißende Bearbeitung
für alle drei Teile in einem Arbeitsgang möglich ist.

In allen Fällen kann grundsätzlich die Hülse gleichzeitig
als Anschlußteil in Form eines Flansches od. dgl. ausgebildet sein, so daß sie neben der Aufgabe, einen definierten stirnseitigen Abschluß des Schlauches zu ermöglichen, auch die Aufgabe der Anschlußverbindung erfüllen
kann.

Ferner ist es aus den bereits erwähnten Gründen auch möglich und vorteilhaft, daß der Gewindegang der Hülse hinsichtlich seiner Steigung von der der schraubengangförmigen Wellung bzw. Wicklung des Schlauches abweicht. Der
aus dem Blech der Hülse gebildete Gewindegang hat bezüglich seiner "Flanken" Spiel innerhalb der Profilierung
des Schlauches, so daß sich mit einer bestimmten Hülsenausbildung auch Schläuche unterschiedlich enger bzw. weiter Profilierung kombinieren lassen.

In allen Fällen ist es zweckmäßig, die Hülse dünnwandig auszubilden. Diese materialsparende Gestaltung erlaubt eine einfache und energiesparende Herstellung sowohl der Hülse als auch der Schweiß- bzw. Lötverbindung und trägt damit erheblich zur Verbilligung des Schlauches bei.

Hinsichtlich der Herstellung kann die Hülse ein tiefgezogenes Formteil sein, wobei hier gleichzeitig die Ausbildung des Gewindeganges erfolgen kann. Es besteht jedoch auch die Möglichkeit, die Hülse durch Biegen eines ggf. vorprofilierten Blechbandes zu einem Ring und Verbinden der aufeinanderstoßenden Bandkanten zu bilden, wobei die Bandkanten formschlüssig, beispielsweise durch Punktschweißen od. dgl., verbunden werden können.

Bei auf den Schlauch aufgeschraubter Hülse kann deren rückwärtiges Ende trompetenförmig aufgebogen bzw. aufgeweitet sein, um eine Kantenberührung zwischen rückwärtigem Hülsenende und Schlauch bei dessen Bewegungen zu vermeiden.

Besonders vorteilhaft kann es jedoch auch sein, daß das rückwärtige Ende der Hülse mit einem dem stirnseitigen entsprechenden Gewindegang versehen ist. Dann greift auch dieser Gewindegang in die Profilierung des Schlauches ein und kann dort aus der übrigen Länge des Schlauches kommende Schwingungen dämpfen, um diese von der Schweißstelle fernzuhalten, die hinsichtlich einer Schwingungsbelastung
eventuell empfindlicher ist als das übrige Schlauchmaterial.

Das zur Bildung des Gewindeganges abgebogene Wandungsmaterial kann ggf. unter Einlage eines Drahtes eingerollt
sein, damit insbesondere für eine schweißende Verarbeitung hierdurch zusätzlicher Werkstoff zur Verfügung steht.
Es kann jedoch auch das freie Ende des den Gewindegang
bildenden Wandungsmaterials unter Bildung einer Welle
nach außen bzw. innen zurückgebogen sein, also jeweils
gegenläufig zu der den Gewindegang bildenden Abbiegung.
Dabei kann durch die wellenförmige Ausbildung in einfacher Weise das übliche Querschnittsprofil eines massiven
Gewindeganges der bekannten Art simuliert werden.

Weitere Merkmale und Einzelheiten der Erfindung ergeben
sich aus der nachfolgenden Beschreibung von Ausführungsformen, die auf der Zeichnung dargestellt sind. In der
Zeichnung zeigen:

Fig. 1 ein Schlauchende mit Anschlußstücken, teilweise
geschnitten der bekannten Art;

Fig. 2 eine auszugsweise vergrößerte Schnittansicht
aus Fig. 1;

Fig. 3 eine Ansicht gemäß Fig. 2 der neuen Gestaltung;

Fig. 4 bis 7 unterschiedliche Ansichten der neuen
Hülse gemäß Fig. 3;

Fig. 8 eine abgewandelte Ausführungsform des Gegenstandes gemäß Fig. 3;

Fig. 9 bis 12 verschiedene Ansichten der Hülse gemäß
       Fig. 8;

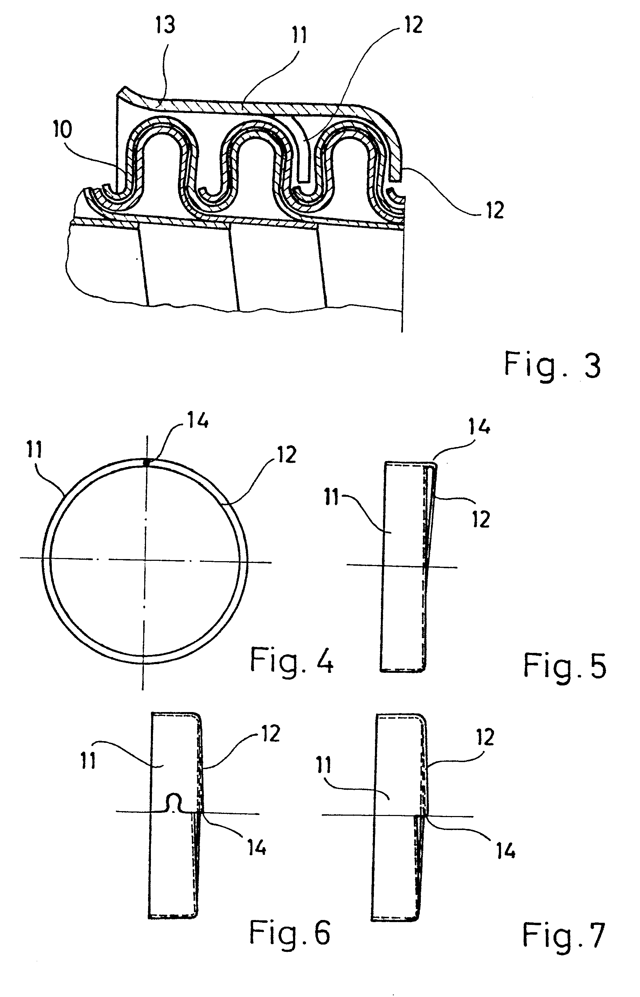

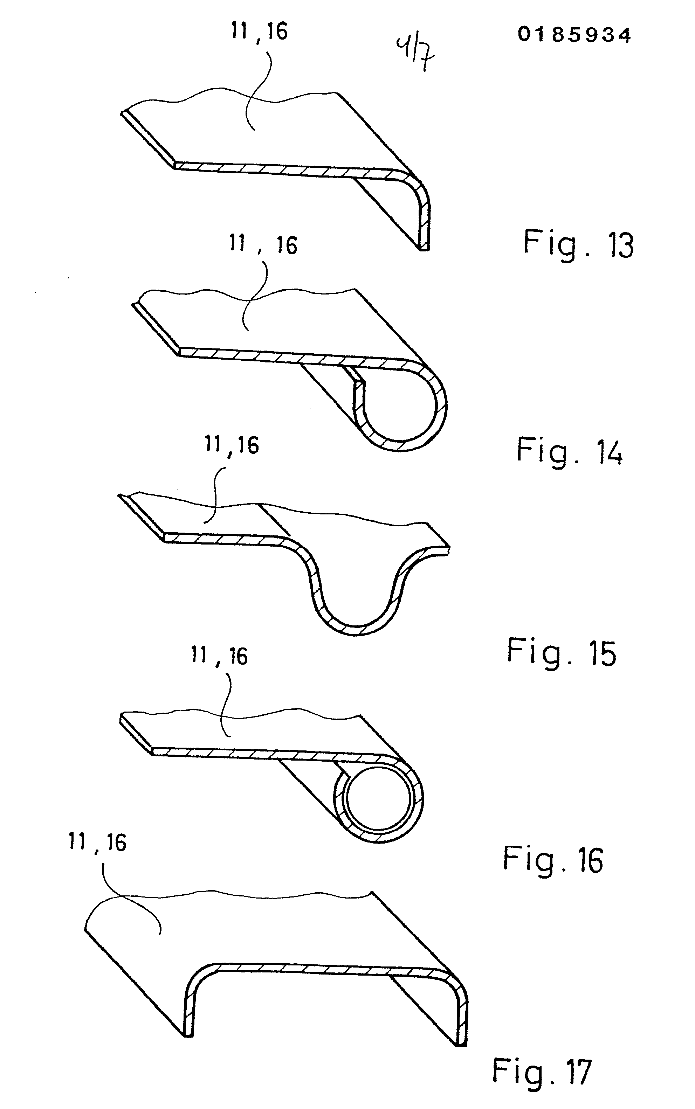

Fig. 13 bis 17 unterschiedliche Gewindeausbildungen
       für die Hülse gemäß Fig. 3 bis 12 und

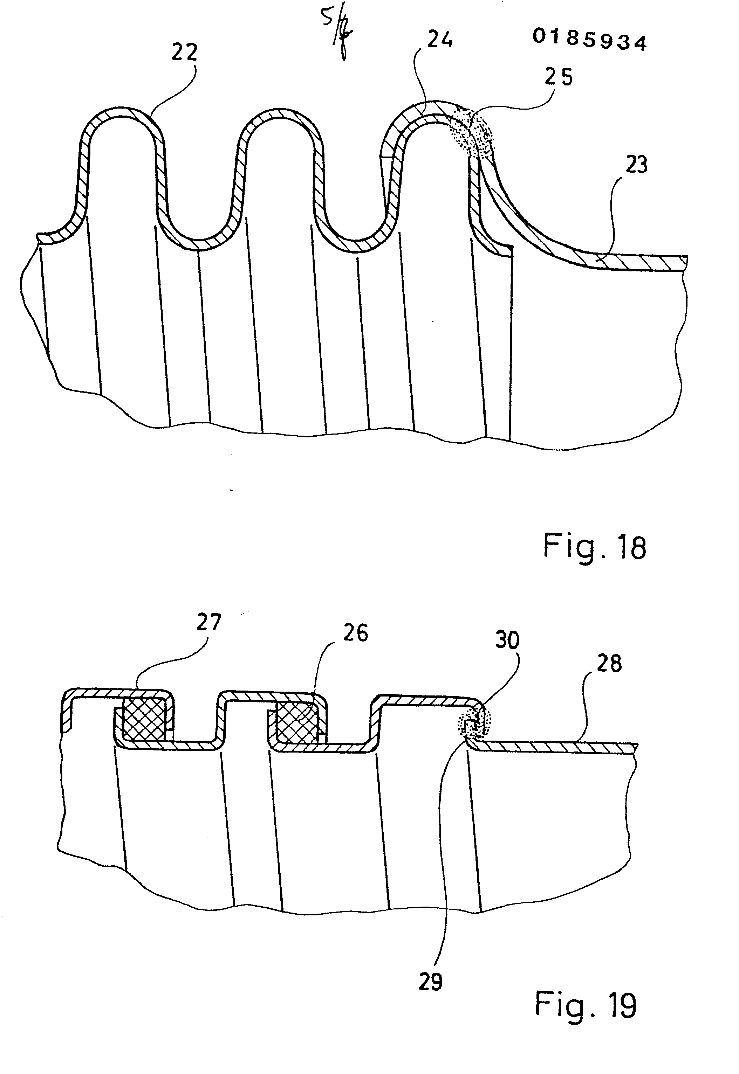

Fig. 18 bis 22 weitere Ausführungsformen der Erfindung.

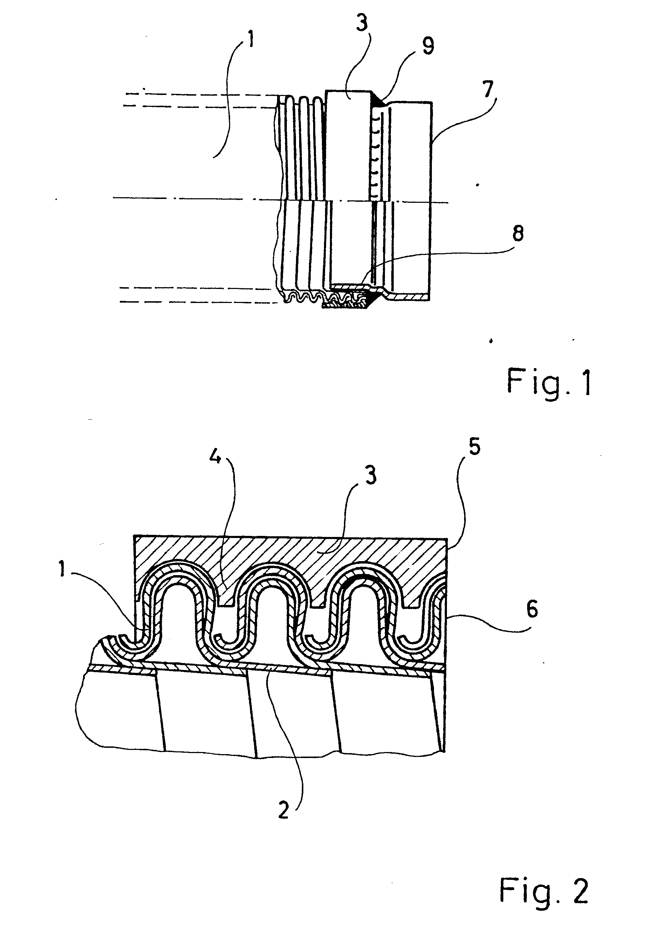

Fig. 1 zeigt das Ende eines Wellschlauches 1, der, wie
auch deutlicher aus Fig. 2 ersichtlich, durch schraubengangförmiges Wickeln eines vorprofilierten Bandes mehrlagig gebildet ist, wobei der in Vorschubrichtung des
Wickelvorganges vorn liegende Bandbereich eine sich ausgehend vom dortigen Wellental axial erstreckende, rohrförmige Verlängerung 2 einstückig verbunden aufweist, die im
wesentlichen dazu dient, Resonanzschwingungen des Wellrohres zu dämpfen und den Strömungswiderstand des Innenquerschnittes des Rohres herabzusetzen. Ein derartiger
Wellschlauch ist durch die DE-PS 26 45 946 bekannt.

Auf das Ende des Wellschlauches 1 ist eine Hülse 3 mittels
ihres in die Profilierung des Wellschlauches eingreifenden Innengewindes 4 aufgeschraubt, derart, daß die Stirnkanten 5 der Hülse 3 und 6 des Wellschlauches miteinander
bündig sind.

In den Wellschlauch ist ein Anschlußstutzen 7, beispielsweise ein Anschweißflansch, mit seinem zylindrischen Teil 8 eingesteckt. Bei 9 sind die Teile 1, 3 und 7 miteinander verschweißt, wobei sich zwischen den Stirnseiten 5 und 6 der Hülse und des Schlauches eine Schweißverbindung ergibt.

Die Hülse 3 ist aus einem entsprechenden Rohrabschnitt durch Eindrehen des Gewindes 4 hergestellt, was umständlich und teuer ist. Außerdem erfordert das Aufschrauben der Hülse 3 auf den Schlauch 1 einigen Zeitaufwand. Beim Verschweißen steht an der Stirnseite 5 der Hülse 3 eine unterschiedliche Menge Materials durch die sich in Umfangsrichtung ergebende axiale Verlagerung des benachbarten Gewindeganges zur Verflüssigung an, so daß entsprechend auch die für den Schweißvorgang einzubringende Erwärmung über den Umfang unterschiedlich ausfällt. Dies führt zu einer über den Umfang ungleichmäßigen Schweißverbindung, die vielfach zu Fehlerhaftigkeit führt.

Fig. 3 zeigt nun in der Fig. 2 entsprechenden Weise wiederum einen Schlauch 10, auf den eine Blechhülse 11 aufgesetzt ist. Die Blechhülse ist an einem Ende so umgebördelt, daß sich ein Gewindegang 12 ergibt, der sich mit dem Schlauchende durch Aufschraugen in Eingriff befindet. Der Gewindegang 12 wird nun in der in Fig. 1 dargestellten Weise mit dem Schlauchende verschweißt, wobei je nach den Erfordernissen auch wieder zusätzlich ein Anschlußflansch 7 vorgesehen werden kann.

Dadurch, daß die Hülse 11 in einfacher Weise einen endständig angeformten Gewindegang 12 aufweist, ist sie mit einem schnellen Handgriff auf das Ende des Schlauches 10 aufzuschrauben. Beim Verschweißen finden über den Umfang gesehen gleiche Materialmengen hinsichtlich des Schlauches 10 und der Hülse 11 bezüglich der Materialverflüssigung Anwendung, so daß die Verhältnisse entlang der gesamten Schweißnaht gleichbleibend sind. Dadurch kann die Schweißvorrichtung leicht auf die richtige Arbeitsweise eingestellt werden, so daß sich während des Schweißvorganges keine Fehlerstellen ergeben können.

Am rückwärtigen Ende ist die Hülse 11 trompetenförmig bei 13 aufgeweitet, so daß ihre dortige Kante vom Schlauch 10 freigestellt ist.

Anhand der Fig. 3 kann man sich leicht vorstellen, daß die Hülse 11 auch als Innenhülse mit nach außen aufgebördeltem Gewindegang bei einem Schlauch ausgebildet sein kann, der ohne die anhand der Fig. 2 mit der Ziffer 2 bezeichneten Verlängerungen ausgebildet ist. Ebenso kann man sich vorstellen, daß die Hülse 11 bei der Darstellung gemäß Fig. 3 in umgekehrter Weise von rechts nach links auf den ersten Profilierungsumlauf des Schlauches 10 aufgeschraubt ist und mit ihrem übrigen, freien Teil nach rechts verläuft, um so als Anschlußteil od. dgl. zu dienen.

Fig. 4 zeigt die Hülse 11 bezogen auf Fig. 3 in Stirnansicht von rechts. Hier ist der Einschnitt 14 zu sehen, von dem ausgehend sich das nach innen umgebogene Wandungsmaterial der Hülse in Umfangsrichtung entlang einer schraubengangförmigen Linie unter Bildung des Gewindeganges 12 erstreckt.

Fig. 5 zeigt die Hülse 11 bezogen auf Fig. 4 von links gesehen. Hier wird noch einmal der Einschnitt 14 und der von da ausgehende Gewindegang 12 deutlich.

Gleiches gilt für die Fig. 6 und 7, die die Hülse 11 in gegenüber der Fig. 5 um 90° gedrehter Weise zeigen. Aus Fig. 6 ist außerdem ersichtlich, daß die Hülse 11 durch Zusammenbiegen eines entsprechend vorprofilierten Blechbandes gebildet ist, wobei an der Stoßstelle eine Verbindung nach Art eines Omega geschaffen ist. Aus der Darstellung gemäß Fig. 7 ist ersichtlich, daß die Hülse 11 als tiefgezogenes Teil in Form eines Topfes mit ausgestanztem Boden gebildet ist, wobei beim Ausstanzen des Bodens gleichzeitig die Ausbildung des Gewindeganges 12 erfolgen kann.

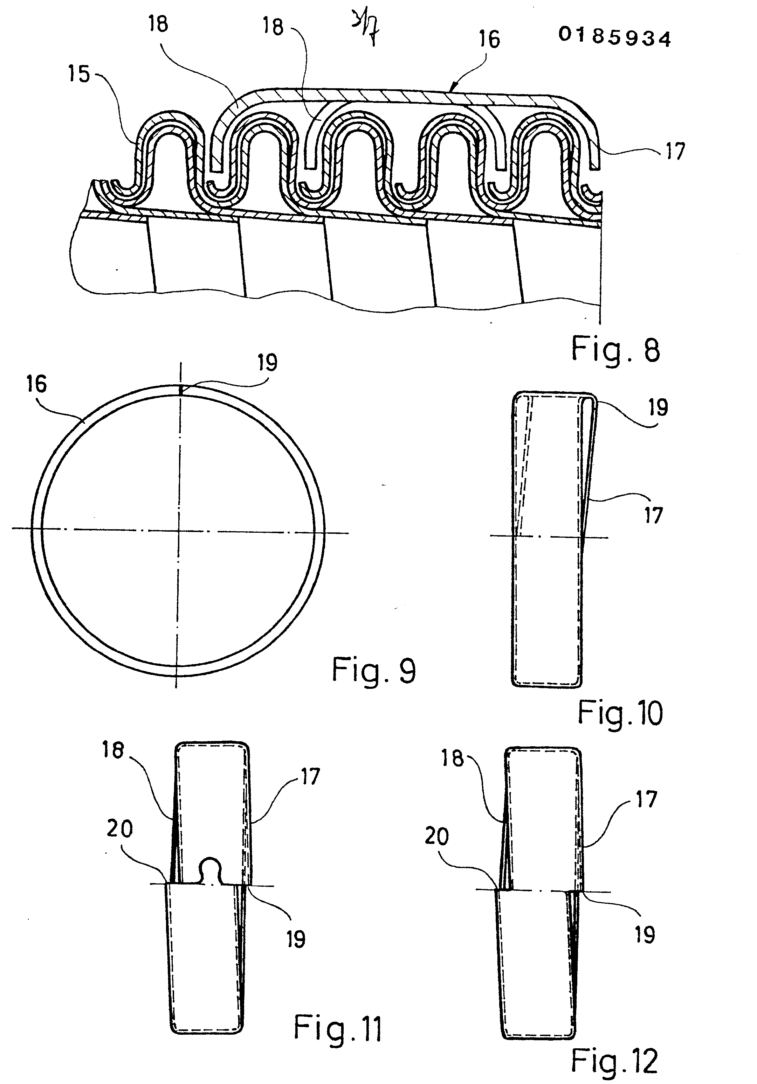

Fig. 8 zeigt eine Variante zur Darstellung und Ausbildung gemäß Fig. 3. Hier ist auf das Ende eines Schlauches 15 eine Hülse 16 mit einem endständigen Gewindegang 17 aufgeschraubt. Die Hülse 16 hat außerdem an ihrem rückwärtigen Ende einen gleich ausgebildeten Gewindegang 18, der sich mit dem Schlauch 15 in Eingriff befindet. Dieser Gewindegang 18 dämpft aus dem Schlauch kommende Schwingungen gegenüber der am Gewindegang 17 befindlichen Verschweißung zwischen Schlauch 15 und Hülse 16.

Die Fig. 9 bis 12 zeigen die Hülse 16 in mit den Fig. 4
bis 7 vergleichbarer Weise, weshalb im einzelnen auf die
dortigen Erläuterungen verwiesen wird. Bei den Fig. 9
bis 12 ist der Einschnitt mit der Ziffer 19 bzw. 20 versehen.

Die Fig. 13 bis 17 zeigen im Einzelausschnitt verschiedene Profilformen für den Gewindegang. Zunächst bei
Fig. 13 wieder die einfache Abbiegung, wie sie bereits
aus den Fig. 3 bis 12 ersichtlich ist. Bei Fig. 14 ist
die Abbiegung eingerollt ausgebildet, wobei gemäß Fig. 16
noch ein Draht 21 miteingelegt sein kann, um für den
Schweißvorgang zusätzliches Material zur Verfügung zu
stellen.

Gemäß Fig. 15 ist die Abbiegung wieder rückgeführt, so
daß sich ein wellenförmig profilierter Gewindegang ergibt.
Fig. 17 zeigt eine beidseitige Abbiegung, wie sie bei
der Hülse 16 gemäß Fig. 8 vorhanden ist.

Fig. 18 zeigt in ausschnittweiser Schnittdarstellung einen
einlagigen Wellschlauch 22 mit schraubengangförmiger Profilierung, wie er beispielsweise durch Längsnahtschweißen
und anschließendes Wellen hergestellt wird. Auf das Ende
des Wellschlauches ist eine Hülse 23 aufgeschraubt, derart,
daß der vom Gewindegang 24 ausgehende weitere Teil der
Hülse 23 sich vom Schlauch 22 fort erstreckt. Bei 25 ist
die Verschweißung der Teile 22, 23 angedeutet. Im übrigen
ist Fig. 18 ein Beispiel dafür, wie in Anlehnung an Fig. 15
der Gewindegang 24 am Ende einer aufzuschraubenden Hülse 23 durch zunächst erfolgendes Biegen nach außen und dann
Zurückbiegen nach innen hergestellt ist.

Fig. 19 zeigt einen durch schraubengangförmiges Wickeln
eines S-förmig vorprofilierten Bandes unter Zwischenlage
einer Dichtschnur 26 hergestellten, einwandigen Schlauches 27. In dessen Ende ist eine Hülse 28 mit einem endständigen Gewindegang 29 eingeschraubt und bei 30 verschweißt.

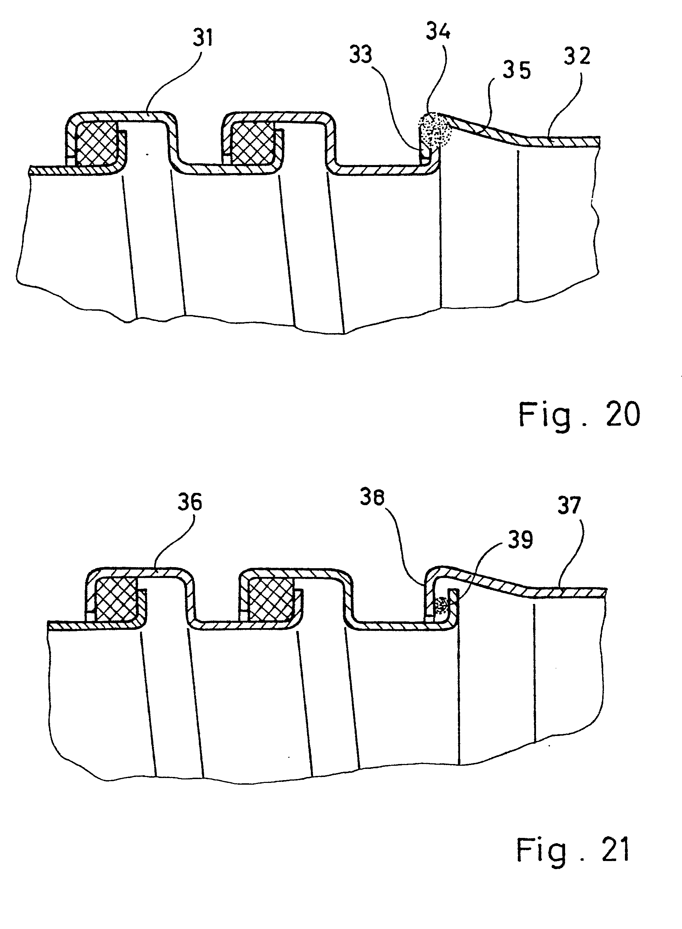

Ähnlich zeigt Fig. 20 einen Schlauch 31, auf dessen Ende
eine Hülse 32 mit einem Gewindegang 33 aufgeschraubt und
bei 34 verschweißt ist. Der Übergang zwischen Hülse 32
und Gewindegang 33 ist bei 35 durch trompetenförmiges
Aufweiten gegeben.

Fig. 21 zeigt entsprechend Fig. 20 einen Schlauch 36 und
eine Hülse 37 mit Gewindegang 38. Hier ist zwischen
Schlauch 36 und Gewindegang 38 ein Lötring 39 eingelegt,
mit Hilfe dessen dann in bekannter Weise ausgehend von
dem dargestellten Halbfertigzustand die Verbindung hergestellt werden kann. Durch die Verwendung eines Lötringes 39 kann die Lotmenge genau dosiert werden.

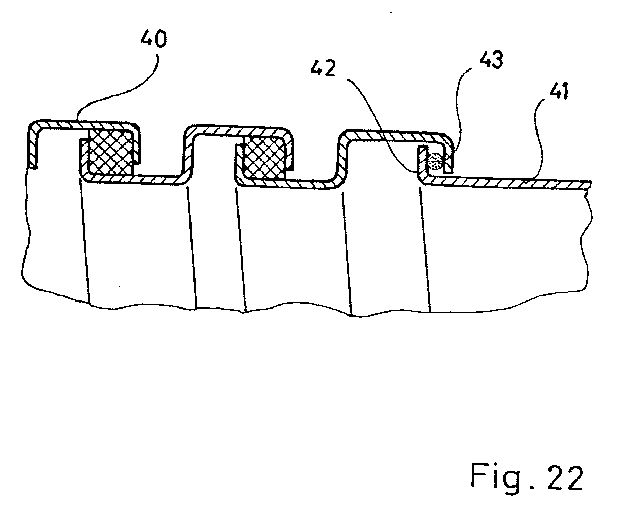

Schließlich zeigt Fig. 22 in der Fig. 19 entsprechenden
Weise einen Schlauch 40 mit eingeschraubter Hülse 41,
deren Gewindegang 42 über einen Lötring 43 am Schlauch 40
festgelegt ist.

PATENTANWÄLTE
DIPL.-ING. R. LEMCKE
DR.- ING. H. J. BROMMER
AMALIENSTRASSE 28
7500 KARLSRUHE 1
TEL.: 0721 / 28778-9

Witzenmann GmbH Metallschlauch-Fabrik Pforzheim
Östliche Karl-Friedrich-Straße 134
7530 Pforzheim

Patentansprüche
================

1. Metallschlauch in Form eines ein- oder mehrwandigen Wellschlauches oder Wickelschlauches mit schraubengangförmig verlaufender Wellung bzw. Wicklung, insbesondere für Abgasanlagen von Kraftfahrzeugen, mit einer mit wenigstens einem Schlauchende durch Schweißen oder Löten verbundenen, hohlzylindrischen Metallhülse, wobei der Schlauch und die Hülse sich über ein an der Hülse ausgebildetes, der Wellung bzw. Wicklung des Schlauches angepaßtes Gewinde in Schraubverbindung befinden, dadurch gekennzeichnet, daß die Hülse (11, 16, 23, 28, 32, 37, 41) als Blechteil ausgebildet ist, daß ein Hülsenende einen Einschnitt (14, 19) aufweist und daß das sich in Umfangsrichtung an den Einschnitt anschließende Wandungsmaterial der Hülse zu deren Mitte hin oder von deren Mitte fort unterschiedlich stark und damit zu einem Gewindegang (12, 17, 24, 29, 33, 38, 42) abgebogen ist.

2. Metallschlauch nach Anspruch 1, dadurch gekennzeichnet, daß die Hülse (11, 16) sich in Axialrichtung über mehrere Windungen bzw. Wicklungen des Schlauches (10, 15) erstreckt, bezüglich des den Gewindegang (12, 17) aufweisenden Endes bündig auf das Schlauchende auf- bzw. in dieses eingeschraubt ist und daß die bündigen Stirnkanten von Schlauch und Hülse miteinander verschweißt sind.

3. Metallschlauch nach Anspruch 2, dadurch gekennzeichnet, daß ein Anschlußflansch (7) aus Metall mit seinem zylindrischen Teil (8) in das Schlauchende ein- bzw. auf dieses aufgesetzt sowie mit den Stirnkanten von Schlauch (10, 15) und Hülse (11, 16) verschweißt ist.

4. Metallschlauch nach Anspruch 1 oder 2, dadurch gekennzeichnet, daß die Hülse als Anschlußteil in Form eines Flansches od. dgl. ausgebildet ist.

5. Metallschlauch nach einem der vorhergehenden Ansprüche, dadurch gekennzeichnet, daß der Gewindegang (12, 17, 18) der Hülse hinsichtlich seiner Steigung von der der schraubengangförmigen Wellung bzw. Wicklung des Schlauches (10, 15) abweicht.

6. Metallschlauch nach einem der vorhergehenden Ansprüche, dadurch gekennzeichnet, daß die Hülse (11, 16) dünnwandig ausgebildet ist.

7. Metallschlauch nach einem der vorhergehenden Ansprüche, dadurch gekennzeichnet, daß die Hülse (11, 16) ein tiefgezogenes Formteil ist.

8. Metallschlauch nach einem der Ansprüche 1 bis 6, dadurch gekennzeichnet, daß die Hülse (11, 16) durch Biegen eines ggf. vorprofilierten Blechbandes zu einem Ring und Verbinden der aufeinanderstoßenden Bandkanten gebildet ist.

9. Metallschlauch nach einem der Ansprüche 2 bis 8, dadurch gekennzeichnet, daß bei aufgeschraubter Hülse (11) deren rückwärtiges Ende trompetenförmig (13) aufgebogen ist.

10. Metallschlauch nach einem der Ansprüche 2 bis 8, dadurch gekennzeichnet, daß das rückwärtige Ende der Hülse (16) mit einem dem stirnseitigen entsprechenden Gewindegang (18) versehen ist.

11. Metallschlauch nach einem der vorhergehenden Ansprüche, dadurch gekennzeichnet, daß das abgebogene Wandungsmaterial ggf. unter Einlage eines Drahtes (21) eingerollt ist.

12. Metallschlauch nach einem der Ansprüche 1 bis 10, dadurch gekennzeichnet, daß das freie Ende des den Gewindegang (Fig. 15; 24) bildenden Wandungsmaterials unter Bildung einer Welle nach außen bzw. innen zurückgebogen ist.

Fig. 1

Fig. 2

13    11    12

10

12

12

Fig. 3

14

11    12

Fig. 4

14

11    12

Fig. 5

12

11    14

Fig. 6

12

11    14

Fig. 7

0185934

Fig. 8

Fig. 9

Fig. 10

Fig. 11

Fig. 12

11,16

4/7    0185934

Fig. 13

Fig. 14

Fig. 15

Fig. 16

Fig. 17

Fig. 18

Fig. 19

Fig. 20

Fig. 21

Fig. 22

## Europäisches Patentamt

# EUROPÄISCHER RECHERCHENBERICHT

## EINSCHLÄGIGE DOKUMENTE

EP 85114791.8

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| A | DE - A - 2 341 055 (SMITHS INDU-STRIES LTD.) <br><br> * Fig. 4,5, Bezugszeichen 60 * <br> -- | 1,6 | F 01 N 7/08 <br> F 01 N 7/18 <br> F 16 L 11/14 |
| A | DE - A1 - 2 419 994 (WESTAFLEX-WERK L. & F. WESTERBARKEY) <br><br> * Gesamt, insbesondere Fig. 1, Bezugszeichen 3 * <br> -- | 1,6 | |
| A | DE - A1 - 2 150 580 (WESTAFLEXWERK L. & F. WESTERBARKEY) <br><br> * Gesamt, insbesondere Bezugs-zeichen 3,9,10 * <br> -- | 1,4,6, 10 | |
| A | DE - A1 - 2 734 983 (METALLSCHLAUCH-FABRIK PFORZHEIM GMBH) <br><br> * Gesamt, insbesondere Bezugs-zeichen 5-8 * <br> -- | 1,6 | |
| A | DE - A1 - 2 645 946 (METALLSCHLAUCH-FABRIK PFORZHEIM GMBH) <br> ---- | | |

RECHERCHIERTE SACHGEBIETE (Int. Cl.4)

F 01 N 7/00

F 16 L 9/00

F 16 L 11/00

F 16 L 13/00

B 21 C 37/00

B 67 B 3/00

Der vorliegende Recherchenbericht wurde für alle Patentansprüche erstellt.

| Recherchenort | Abschlußdatum der Recherche | Prüfer |
|---|---|---|
| WIEN | 13-03-1986 | PIPPAN |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein-stimmendes Dokument

EPA Form 1503 03 82